(19) Europäisches Patentamt
European Patent Office
Office européen des brevets

(11) Publication number: 0 323 175
A2

(12) # EUROPEAN PATENT APPLICATION

(21) Application number: 88312268.1

(51) Int. Cl.4: C08G 75/02

(22) Date of filing: 22.12.88

(30) Priority: 24.12.87 JP 325279/87

(43) Date of publication of application:
05.07.89 Bulletin 89/27

(84) Designated Contracting States:
BE CH DE FR GB LI NL

(71) Applicant: Tosoh Corporation
4560, Oaza Tonda
Shinnanyo-shi Yamaguchi-ken(JP)

Applicant: Toso Susteel Co., Ltd.
7-7, Akasaka 1-chome
Minato-Ku Tokyo(JP)

(72) Inventor: Kato, Toshikazu
5-1, Betsumei 3-chome
Yokkaichi-shi Mie-ken(JP)
Inventor: Inoue, Hiroshi
5-8, Betsumei 3-chome
Yokkaichi-shi Mie-ken(JP)
Inventor: Ogawara, Kensuke
9-30, Betsumei 6-chome
Yokkaichi-shi Mie-ken(JP)

(74) Representative: Kearney, Kevin David
Nicholas et al
KILBURN & STRODE 30 John Street
London, WC1N 2DD(GB)

(54) **Method of treating polyphenylene sulfide.**

(57) Polyphenylene sulfide resins having improved curing performance are provided by treating polyphenylene sulfide with an alkali metal hydroxide in an organic polar solvent.

The resulting resins behave as thermosetting resins in various molding or shaping processes to provide articles exhibiting improved chemical and physical properties.

EP 0 323 175 A2

## METHOD OF TREATING POLYPHENYLENE SULFIDE

The present invention relates to a process for producing polyphenylene sulfide having improved curing performance. The polyphenylene sulfide obtained by the process of the present invention has improved curing performance and hence is adapted for use as a thermosetting resin.

Polyphenylene sulfide has high resistance to heat and chemicals and use of it in electrical and electronic parts, as well as in coating materials for metals, etc. is drawing attention of researchers. This polymer can be injection-molded, extrusion-molded or otherwise molded into various shaped articles including films, sheets and fibers, and the resulting shaped articles find extensive use in applications where resistance to heat and chemicals is required.

One conventional method for producing polyarylene sulfide consists of reacting a dihalo aromatic compound with an alkali metal sulfide in an organic polar solvent such as N-methylpyrrolidone (see Japanese Patent Publication No. 45-3368).

The polymer produced by this method has such a low melt viscosity that difficulty is encountered in such applications as injection molding, although it is usable in the formation of coating dispersions. Therefore, this polymer of low melt viscosity has been used in shaping and processing applications after being cross-linked (cured) by thermal oxidation. However, this method achieves only a small increase in melt viscosity (curing performance) upon cross-linking by thermal oxidation and the resulting polymer must be cured at high temperatures and for a prolonged period in order to attain the melt viscosity necessary for injection molding, extrusion molding or coating of metals with a fluidized layer. This leads to disadvantages of low production rate and increased cost.

Two methods have been proposed, one in US Patent No. 3,763,124 and the other in Japanese Patent Public Disclosure No. 59-6221, for improving the curing performance of polyphenylene sulfide. In the first method, alkali metal sulfides containing impurities such as alkali metal hydrosulfide and alkali metal thiosulfates are treated with an alkali metal hydroxide, thereafter dehydrated in an organic polar solvent, and subsequently reacted with p-dichlorobenzene. However, the improvement achieved in the curing performance of polyphenylene sulfide by this method is still insufficient to obviate the need to perform subsequent curing at elevated temperatures for a prolonged period. Furthermore, since alkali metal sulfides which are highly corrosive to metals are treated with alkali metal hydroxides, a special apparatus must be provided that is made of a material having resistance to the corrosive action of alkali metal sulfides.

In the second method, polyphenylene sulfide is treated with an alkali metal sulfide in N-alkyl lactam, then reacted at high temperatures with a poly-haloaromatic compound containing 3 - 6 halogen atoms. However, the treatment of polyphenylene sulfide with an alkali metal sulfide yields thiophenol, thioanisole, diphenyl disulfide, etc. as by-products to the decomposition reaction of the polymer and they present difficulty in purifying the solvent N-alkyl lactam. Another problem with this method is the need to adopt many production steps.

An object, therefore, of the present invention is to provide a process by which polyphenylene sulfide having improved curing performance (allowing significant increase in melt viscosity upon curing) can be produced at low cost and with great convenience.

Another object of the present invention is to provide polyphenylene sulfide that is adapted for use as a thermosetting resin.

The first object of the present invention can be attained by a method of treating polyphenylene sulfide which consists of reacting it with an alkali metal hydroxide in an organic polar solvent. The polyarylene sulfide obtained by the present invention has the advantage that its melt viscosity can be sufficiently increased upon curing to realize a significant reduction in the curing time.

The polyphenylene sulfide (hereinafter abbreviated as PPS) to be used in the present invention contains at least 70 mol%, preferably 90 mol%, of recurring units represented by the formula:

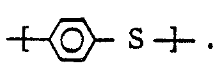

If this requirement is met, PPS may have other components copolymerized or part of it may be cross-linked. Examples of other components that can be used include:

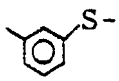, 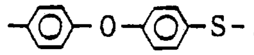, 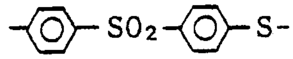,

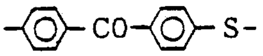, 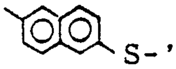, 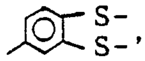, 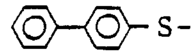 and 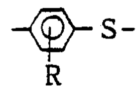

(where R is an alkyl, phenyl, nitro, carboxyl, nitrile, amino, alkoxyl, hydroxyl or sulfone group).

Among the examples of PPS shown above, those having a melt viscosity of at least 1 Pa.s as measured with a KOHKA-type flow tester (300 °C, 10 kg load, die, 0.5 mm$^{\Phi}$ x 2 mm$^{L}$) are preferred. With PPS having a melt viscosity lower than 1 Pa.s, a strong shaped article cannot be obtained after curing. PPS that is usable in the present invention may or may not be purified after polymerization.

Examples of the alkali metal hydroxide that can be used in the present invention include lithium hydroxide, sodium hydroxide, potassium hydroxide and mixtures thereof. These alkali metal hydroxides may be used in either solid or aqueous solution form, the latter being preferred from the viewpoint of ease of handling in industrial operations.

The amount in which the alkali metal hydroxides are used may be appropriately adjusted in accordance with the desired level of improvement in curing performance. Generally, they are used in amounts of 0.01 - 20 mol%, preferably 0.1 - 15 mol%, of the recurring units in PPS. If less than 0.01 mol% of the alkali metal hydroxide is used, no significant improvement in curing performance is achieved. Using more than 20 mol% of the alkali metal hydroxide is not preferred from an economic viewpoint.

Organic polar solvents that are aprotic and which are stable at high temperatures are preferably used in the present invention. Illustrative examples include: amides and urea derivatives such as N,N-dimethylacetamide, N-ethyl-2-pyrrolidone, N-methyl-2-pyrrolidone, hexamethyl phosphorylamide, tetramethylurea and 1,3-dimethyl-2-imidazolidinone; sulfolanes such as sulfolane and dimethylsulfolane; ketones such as methyl phenyl ketone; and mixtures of these compounds. These solvents are used in such amounts that the concentration of PPS will be in the range of 3 - 60 wt%, preferably 7 - 40 wt%.

In accordance with the present invention, the reaction is performed normally at 180 - 300 °C, preferably 200 -270 °C, with stirring for a period of 0.5 - 20 hours. If the reaction temperature is lower than 180 °C, the rate of reaction becomes undesirably slow. If the reaction is performed at temperatures above 300 °C, polymer decomposition occurs, which is certainly undesirable for the purposes of the present invention.

The resulting polyphenylene sulfide may be recovered from the reaction mixture by any ordinary method, such as a method consisting of removing the solvent by distillation, flashing or some other suitable means, washing the polymer with an organic solvent and water, and recovering it, or a method consisting of removing the solvent by filtering the cooled reaction mixture, washing the polymer with water and recovering it.

The polyphenylene sulfide thus produced by the process of the present invention may or may not be subjected to a heat treatment before it is put to practical use. If necessary, various additives may be incorporated in the polymer and illustrative additives include reinforcing fillers such as glass fibers, carbon fibers, ceramic fibers such as alumina fibers, aramid fibers, totally aromatic polyester fibers, metal fibers and potassium titanate whiskers; inorganic fillers such as calcium carbonate, mica, talc, silica, barium sulfate, calcium sulfate, kaolin, clay, pyroferrite, bentonite, sericite, zeolite, nepheline syenite, attapulgite, wollastonite, PMF, ferrite, calcium silicate, magnesium carbonate, antimony trioxide, zinc oxide, titanium oxide, magnesium oxide, iron oxide, molybdenum disulfide, graphite, gypsum, glass beads, glass powder, glass balloons and quartz; and organic or inorganic pigments.

Other additives that may be incorporated as required include plasticizers, mold release agents, silane or titanate based coupling agents, lubricants, heat stabilizers, weather-proofing agents, nucleating agents, foaming agents, ion trapping agents, flame retardants and flame retarding aids.

If necessary, homopolymers, random copolymers, block copolymers and graft copolymers, either on their own or as admixtures, may be mixed with the polyphenylene sulfide, and they include: polyethylene; polybutadiene; polyisoprene; polychloroprene; polystyrene; polybutene; poly-α-methylstyrene; polyvinyl acetate; polyvinyl chloride; polyacrylate esters; polymethacrylate esters; polyacrylonitrile; polyamides such as nylon 6, nylon 66, nylon 610, nylon 12 and nylon 46; polyesters such as polyethylene terephthalate, polybutylene terephthalate and polyarylate; polyurethane; polyacetal; polycarbonate; polyphenylene oxide; polysulfone; polyether sulfone; polyaryl sulfone; polyphenylene sulfide sulfone; polyphenylene sulfide ketone; polyether ketone; polyether ether ketone; polyimide; polyamideimide; silicone resins; phenoxy resins; and fluorine resins.

The following examples are provided for the purpose of further illustrating the present invention but are

in no way to be taken as limiting.

In the examples and comparative examples shown below, the melt viscosities of the samples of polyphenylene sulfide prepared were measured with a KOHKA-type flow tester (die, 0.5 mm$^{\Phi}$ x 2 mm$^{L}$) at 300 °C under a load of 10 kg.

Reference Example 1

The PPS used in the examples and comparative examples was prepared by the following method.

A reactor (inner capacity, 15 ℓ) equipped with a stirrer, a dehydration column and a jacket was charged with 5 ℓ of N-methylpyrrolidone and 14.2 moles of $Na_2S \bullet 2.8H_2O$ and the contents were heated to 200 °C under stirring. As a result, 440 g of a distillate chiefly composed of water distilled off. After cooling the system to 170 °C, 14.8 moles of p-dichlorobenzene were added and the mixture was heated at 250 °C for 3 hours to effect polymerization.

After the polymerization, the temperature in the reactor was lowered to room temperature and the contents were recovered and subjected to centrifugation. The pellet was washed thoroughly with methanol and hot water and subsequently dried by heating overnight.

The PPS thus obtained had a melt viscosity of 3.3 Pa.s.

Example 1

An autoclave (inner capacity, 500 ml) was charged with 54 g of PPS prepared in Reference Example 1, 0.2 g of sodium hydroxide and 300 g of N-methylpyrrolidone, and reaction was performed with stirring at an elevated temperature of 250 °C for 1 hour.

After cooling to room temperature, the polymer was separated by filtration, washed thoroughly with methanol and warm water, and dried overnight at 100 °C.

The polymer thus obtained had a melt viscosity of 9.1 Pa.s and its yield was 94%.

To evaluate its curing performance, the polymer was heat-treated at 255 °C for 1 hour in air and subjected to melt viscosity measurement; the melt viscosity of the polymer had increased markedly to 120 Pa.s from the initial 9.1 Pa.s.

Comparative Example 1

To evaluate its curing performance, PPS prepared in Reference Example 1 was heat-treated at 255 °C for 1 hour in air and subjected to melt viscosity measurement; the melt viscosity of PPS only increased to 5.4 Pa.s.

Example 2

The procedures of Example 1 were repeated except that a 10% aqueous solution of NaOH was used in an amount of 2.0 g. The results are shown in Table 1.

Example 3

The procedures of Example 1 were repeated except that a 10% aqueous solution of NaOH was used in an amount of 12 g. The results are shown in Table 1.

Example 4

The procedures of Example 1 were repeated except that a 10% aqueous solution of NaOH was used in an amount of 20 g. The results are shown in Table 1.

Example 5

The procedures of Example 1 were repeated except that a 10% aqueous solution of NaOH was used in an amount of 12 g and that the reaction time was extended to 2 hours. The results are shown in Table 1.

Comparative Example 2

The procedures of Example 5 were repeated except that a 10% aqueous solution of NaOH was not added. The results are shown in Table 1.

Comparative Example 3

The procedures of Example 5 were repeated except that 12 g of pure water used in place of the 10% aqueous solution of NaOH. The results are shown in Table 1.

Example 6

The procedures of Example 2 were repeated except that 2.8 g of a 10% aqueous solution of KOH was used in place of the 10% aqueous solution of NaOH.

A polymer having a melt viscosity of 8.7 Pa.s was obtained in a yield of 95%. Upon curing, the melt viscosity of the polymer increased to 125 Pa.s.

Table 1

| | Reaction conditions | | | | | | Yield (%) | Melt viscosity of polymer after reaction (Pa.s) | Melt viscosity of polymer after curing (Pa.s) |
|---|---|---|---|---|---|---|---|---|---|
| | PPS (g) | NaOH (g) | $H_2O$ | NMP (g) | temperature (°C) | time (h) | | | |
| Ex. 2 | 54 | 2 | - | 300 | 250 | 1 | 95 | 9.4 | 140 |
| 3 | 54 | 12 | - | 300 | 250 | 1 | 95 | 9.5 | 161 |
| 4 | 54 | 20 | - | 300 | 250 | 1 | 98 | 5.9 | 455 |
| 5 | 54 | 12 | - | 300 | 250 | 2 | 98 | 9.9 | 164 |
| Comp. Ex. 2 | 54 | - | - | 300 | 250 | 2 | 95 | 3.6 | 6.5 |
| 3 | 54 | - | 12 | 300 | 250 | 2 | 95 | 3.6 | 6.4 |

1) NaOH : 10% aqueous solution of NaOH
2) NMP : N-methyl-2-pyrrolidone

As will be understood from the foregoing explanation, the method of the present invention is capable of markedly enhancing the curing performance of PPS, thereby shortening greatly the duration of the time required for curing PPS to a desired melt viscosity.

## Claims

1. A method of treating polyphenylene sulfide characterised in that it consists of reacting it with an alkali metal hydroxide in an organic polar solvent.

2. A method as claimed in Claim 1 characterised in that the polyphenylene sulfide is a homopolymer or copolymer comprising at least 70 mol% of repeating units represented by the formula

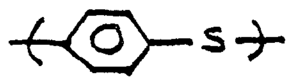

3. A method as claimed in Claim 1 or Claim 2 characterised in that the alkali metal hydroxide is employed in a proportion of 0.01 to 20 mol% of the polyphenylene sulfide repeating units.

4. A method as claimed in anyone of claims 1 to 3 characterised in that the solvent is selected from amides, sulfolanes, ketones and mixtures thereof.

5. A method as claimed in anyone of claims 1 to 4 characterised in that the solvent is employed in such an amount that the reaction mixture contains from 3% to 6% by weight of polyphenylene sulfide.

6. A method as claimed in anyone of claims 1 to 5 characterised in that the reaction is effected at a temperature of from 180 to 300 °C for a period of 0.5 to 20 hours.

7. A method as claimed in Claim 6 characterised in that the temperature ranges from 200 to 270 °C.

8. A method as claimed in anyone of claims 1 to 7 characterised in that the alkali metal hydroxide is sodium hydroxide.

9. A method as claimed in anyone of claims 1 to 8 characterised in that it comprises a further step of recovering the treated product from the reaction mixture.

10. A polyphenylene sulfide material produced by a method as claimed in anyone of the preceding Claims 1 - 9.